# EUROPÄISCHE PATENTSCHRIFT

(11) **EP 2 058 582 B1**
(45) Veröffentlichungstag und Bekanntmachung des Hinweises auf die Patenterteilung: **22.04.2015**
(21) Anmeldenummer: 08019781.7
(22) Anmeldetag: 12.11.2008
(51) Int. Cl.: F21S 8/00, F21Y 101/02

(54) **LED-Leuchte**
LED-lamp
Lampe à DEL

(30) Priorität: 12.11.2007 DE 102007053791
(43) Veröffentlichungstag der Anmeldung: 13.05.2009
(73) Patentinhaber: Siteco Beleuchtungstechnik GmbH, 83301 Traunreut (DE)
(72) Erfinder: Härtl, Michael, 83278 Traunstein (DE); Lukanow, Stephan, 83377 Vachendorf (DE); Prodell, Peter, 83308 Trostberg (DE); Meyer, Clemens, 83278 Traunstein (DE)
(74) Vertreter: Schohe, Stefan

(56) Entgegenhaltungen:
- WO-A-2005/090852
- WO-A-2005/099310
- WO-A-2007/117064
- DE-A1- 10 315 417
- DE-A1- 19 922 176
- DE-A1-102007 013 129
- DE-U1- 20 107 420
- DE-U1- 20 317 444

## Beschreibung

Die vorliegende Erfindung bezieht sich auf Leuchten, deren Leuchtmittel durch LEDs (lichtemittierende Dioden) gebildet sind.

Die jüngeren Entwicklungen auf dem Gebiet der LED-Technik ermöglicht es, LEDs herzustellen, die eine so hohe Lichtstärke aufweisen, daß sie auch klassische Leuchtmittel, wie Glühlampen, Leuchtstofflampen oder Hochdrucklampen, ersetzen können. Im Stand der Technik sind daher zahlreiche Innen- und Außenleuchten bekannt, welche die LED-Technik verwenden. Allerdings orientiert sich die Gestaltung dieser Leuchten an Vorbildern, wie sie ursprünglich für den Einsatz mit klassischen Beleuchtungsmitteln konzipiert wurden.

Die DE 103 15 417 A1 offenbart eine Lichtplatte und ein Verfahren zur Herstellung von dreidimensionalen Leuchtobjekten aus der Lichtplatte. Die Lichtplatte umfasst eine Trägerplatte, in der LEDs integriert sind und eine oder mehrere Abdeckplatten, die an der Trägerplatte planparallel anliegen. Die Platten sind aus thermoplastischen Kunststoffen gebildet, so dass die Lichtplatte thermisch in beliebige dreidimensionale Leuchtobjekte, z.B. in eine Schale, verformt werden kann.

Die DE 203 17 444 U1 offenbart eine Beleuchtungsvorrichtung insbesondere für Straßen, Wege und Plätze. An einem Trägerarm sind an einem U-förmigen Bereich hintereinander mehrere Beleuchtungsvorrichtungen angebracht, deren Leuchtmittel aus LEDs gebildet sind und die einen Lichtlenkkörper unterhalb der LEDs zur Gestaltung der Lichtverteilung aufweisen. Der Tragarm ist in einem vertikalen Querschnitt gekrümmt.

WO 2005/099310 A2 offenbart eine lichtaktive Platte, die eingeschlossene, lichtemittierende Dioden, die vorzugsweise Licht auf beide Seiten der lichtaktiven Platte abgeben, aufweist. Die lichtaktive Platte kann flexibel sein. Gemäß einer Ausführungsform ist ferner ein Metallfilm aus lichtaktivem Platte enthalten.

DE 199 22 176 A1 offenbart eine Oberflächenmontierte LED-Mehrfachanordnung. Eine Platine mit mehreren LEDs wird auf einem gekrümmten Kühlkörper aufgebracht, so dass Wärme optimal abgeführt werden kann. Der Kühlkörper kann jede gewünschte Form aufweisen, insbesondere für Kraftfahrzeuge, wie Blinker oder dergleichen. Der Kühlkörper kann aus Kupfer oder Aluminium oder aus einem Kühlblech bestehen. Die Platine ist mit einem Wärmeleitkleber auf dem Kühlkörper auflaminiert.

Die vorliegende Erfindung sieht demgegenüber die Aufgabe vor, die Gestaltungsmöglichkeiten für Leuchten, welche die LED-Technik ermöglichen, besser auszunutzen. Insbesondere ist es die Aufgabe der Erfindung, Leuchten, basierend auf der LED-Technik, bereitzustellen, die den Anfordernissen hinsichtlich einer gewünschten Lichtverteilung sowie den thermischen Anfordernissen für einen betriebssicheren Gebrauch der Leuchte besser gerecht werden, als dies mit herkömmlichem Leuchtendesign möglich war.

Gemäß der vorliegenden Erfindung ist eine Leuchte nach Anspruch 1 vorgesehen. Insbesondere kann die Dicke des Leuchtenkörpers zusammen mit den darauf montierten LEDs weniger als 12 mm, bevorzugt weniger als 10 mm betragen.

Der Vorteil des Leuchtenkonzepts gemäß der vorliegenden Erfindung beruht auf der Kombination einer flächig dünnen Bauform der Leuchte mit einer gewölbten Oberfläche. Dieses Design einer Leuchte, welches mit herkömmlichen Leuchtmitteln nicht oder nur mit erheblichem Aufwand möglich gewesen wäre, stellt nicht nur eine ästhetisch ansprechende Leuchte dar, sondern bietet erhebliche technische Vorteile. Insbesondere ermöglicht es eine Gestaltung einer gewünschten Lichtverteilung einer Leuchte, durch Auswählen der Krümmung des Leuchtenkörpers, von dessen Oberfläche sich die LEDs jeweils mit der Hauptabstrahlrichtung in Richtung der Flächennormale erstrecken, wobei gleichzeitig auch die durch die LEDs erzeugte Wärme über den Leuchtenkörper abgeführt werden kann. Die Krümmung des mit LEDs besetzen Leuchtenkörpers ermöglicht dabei eine Leuchte mit verhältnismäßig kompakten Abmessungen, die trotzdem eine große Fläche aufweist, die ausreichend ist, um eine zur Erzeugung der gewünschten Lichtstärke genügende Anzahl von LEDs aufzunehmen und die durch den Betrieb der LEDs erzeugte Wärme abzuführen.

Gemäß einer bevorzugten Ausführungsform beträgt die Dicke der Leuchte außerdem weniger als 30% der Erstreckung des Leuchtenkörpers in der Richtung senkrecht zu der Richtung, welche die maximale Erstreckung definiert. Gemäß einer Ausführungsform weist der Leuchtenkörper eine maximale Erstreckung zwischen 400 mm und 800 mm, bevorzugt zwischen 500 mm und 700 mm auf. Die Erstreckung des Leuchtenkörpers in der dazu senkrechten Richtung beträgt vorzugsweise zwischen 200 mm bis 400 mm, bevorzugt zwischen 270 mm und 350 mm.

Die LEDs können auf der gekrümmten Oberfläche des Leuchtenkörpers gleichmäßig verteilt sein, beispielsweise so, daß die Leistung der LEDs pro Flächeninhalt der mit LEDs besetzten Oberfläche im Mittel etwa konstant bleibt, z.B. um nicht mehr als ±10% über benachbarte Quadrate von 1 dm² der mit LEDs besetzte Oberfläche des Leuchtenkörpers schwankt. Insbesondere können beispielsweise LEDs mit insgesamt bis zu 200 W oder 300 W auf der gesamten Fläche vorgesehen sein. Durch die Krümmung der mit LEDs besetzten Oberfläche läßt sich der Lichtstrom dieser LEDs in die gewünschte Richtung lenken, während die Fläche noch genügend groß ist, um die Wärme der LEDs abzuführen. Alternativ können Teilbereiche der Oberfläche des Leuchtenkörpers, die in Raumrichtungen weisen, in denen eine besonders hohe Lichtstärke gewünscht ist, LEDs in geringen Abständen und/oder LEDs mit zugeordneten Optiken, die eine stärker fokussierte Lichtverteilung hervorbringen, aufweisen.

Gemäß einer bevorzugten Ausführungsform ist die mit LEDs besetzte Oberfläche des Leuchtenkörpers nur ein stetig gekrümmter Flächenabschnitt oder setzt sich aus mehreren stetig gekrümmten Flächenabschnitten zusammen, die entlang einer oder mehrerer Kanten verbunden sind. Eine stetige Krümmung bezeichnet dabei eine Oberfläche, deren Krümmungsänderung entlang jeder Tangentialrichtung der Oberfläche keine Sprünge aufweist (d.h. die Oberfläche ist frei von Kanten oder Stufen) und entlang wenigstens einer Tangentialrichtung der Oberfläche einen endlichen Krümmungsradius aufweist.

Gemäß einer bevorzugten Ausführungsform ist die Leuchte entlang der wenigstens ersten Tangentialrichtung konkav gewölbt. Die konkave Wölbung ermöglicht es, das von den LEDs abgegebene Licht zu bündeln und zwar in Richtung zu einer Schnittebene durch die mit LEDs besetzte Oberfläche, welche senkrecht zu der Tangentialrichtung verläuft, entlang derer die konkave Wölbung ausgebildet ist.

Gemäß einer weiteren bevorzugten Ausführungsform ist die Oberfläche des Leuchtenkörpers entlang einer zweiten Tangentialrichtung konvex, gradlinig oder konkav ausgebildet. Durch die konkave Krümmung läßt sich das Licht auch auf diese entsprechend definierte Schnittebene bündeln, während es durch die gradlinige oder konvexe Krümmung die Lichtstärkeverteilung gleich verteilt bzw. aufgeweitet wird.

Gemäß einer bevorzugten Ausführungsform ist der Leuchtenkörper aus einem Material gebildet, das eine Wärmeleitfähigkeit von mehr als 40 W/(K·m), bevorzugt mehr als 100 W/(K.m) aufweist. Beispielsweise kann der Leuchtenkörper aus Aluminium, insbesondere aus einem Aluminiumdruckguß gebildet sein. Aluminium weist eine Wärmeleitfähigkeit von etwa 210 W/(K·m) auf. Diese Materialien sind geeignet, um die Ableitung der durch die LEDs erzeugten Wärme zu gewährleisten. Dies gilt auch für besonders lichtstarke LEDs, beispielsweise LEDs mit einer Leistung von 1 bis 5 Watt. Beispielsweise können LEDs der Serie Dragon von Osram oder Rebel von Philips Lumileds eingesetzt werden. Ferner können zusätzlich zu den leistungsstarken LEDs auch lichtschwächere LEDs auf der Oberfläche des Leuchtenkörpers angeordnet werden. Insbesondere können diese LEDs farbig sein und getrennt ansteuerbar sein, um Lichtakzente zu setzen. Durch die farbliche Gestaltung können auch Signale übermittelt werden.

Erfindungsgemäß sind die LEDs gruppenweise auf Boards angeordnet, insbesondere entlang einer Reihe, wobei die Boards in die Oberfläche des Leuchtenkörpers integriert oder auf der Oberfläche des Leuchtenkörpers angebracht sind. Die Boards sind mechanisch mit dem Leuchtenkörper gekoppelt. Erfindungsgemäß ist eine lösbare mechanische Verbindung vorgesehen.. Die Boards können die elektrische Verkabelung der LEDs tragen. Beispielsweise sind die Boards aus einem ausreichend nachgiebigen Material gebildet, so daß die Boards eben hergestellt werden können, sich aber trotzdem der Krümmung der Oberfläche des Leuchtenkörpers anpassen, wenn sie darauf montiert werden. Vorzugsweise sind die LEDs in Reihen auf den Boards vorgesehen und die Boards sind entlang einer Tangentialrichtung auf der gekrümmten Oberfläche angeordnet, so daß die Boards nicht gekrümmt werden müssen oder nur entlang einer Richtung, d.h. ohne Torsion, gekrümmt werden müssen. Dadurch läßt sich der Leuchtenkörper mit den LEDs besonders einfach herstellen.

Zwischen den Boards und dem Leuchtenkörper ist die mechanische Verbindung vorzugsweise so ausgestattet, daß sie eine gute Wärmeleitfähigkeit zwischen den Boards und dem Leuchtenkörper ermöglicht. Beispielsweise kann eine Wärmeleitpaste zwischen den Boards und dem Leuchtenkörper vorgesehen sein. Dadurch kann eine gute Wärmeableitung trotz getrennter Bauteile gewährleistet werden. Auch beim Aufkleben der Boards auf dem Leuchtenkörper kann eine gute Wärmeleitfähigkeit erzielt werden. Insbesondere können Klebstoffe oder ein Klebeband mit einer erhöhten Wärmeleitfähigkeit verwendet werden.

Gemäß einer Ausführungsform ist die Seite des Leuchtenkörpers, welche der mit LEDs besetzten Oberfläche gegenüberliegt, mit zusätzlichen Elementen zur Wärmeabgabe ausgestattet, insbesondere mit Kühlrippen. Ein Vorteil der gekrümmten Form des Leuchtenkörpers besteht auch darin, daß diese zusätzlichen Elemente von außen nicht sichtbar sind, weil sie auf der vom Betrachter abgewandten Seite der Leuchtenkörperoberfläche angeordnet sind.

Auf der Seite des Leuchtenkörpers, die der mit den LEDs besetzten Oberfläche gegenüberliegt, lassen sich auch andere Betriebsmittel der Leuchte anordnen. Insbesondere können dort auch Solarzellen vorgesehen sein. Auch diese sind für den Betrachter durch die gewölbte Form des Leuchtenkörpers nicht sichtbar, weil sie durch die mit LEDs besetzte Oberfläche des Leuchtenkörpers verdeckt ist.

Die Zusatzelemente auf der Leuchtenrückseite, wie Solarzellen oder weitere Betriebsmittel, bleiben bei der Bestimmung der Leuchtendicke außer Betracht. Durch die Höhe der Kühlrippen kann sich die Dicke der Leuchte beispielsweise um maximal 130 mm erhöhen.

Gemäß einer bevorzugten Ausführungsform sind die Seitenränder des Leuchtenkörpers, welche die seitliche Begrenzung der mit LEDs besetzten Oberfläche des Leuchtenkörpers bilden, wenigstens teilweise entlang des Umfangs des Leuchtenkörpers abgerundet. Der Leuchtenkörper kann entlang seiner Seitenränder eine geschwungene Form aufweisen, welche nicht nur ein optisch ästhetisches Erscheinungsbild der Leuchte bietet, sondern darüber hinaus eine individuelle Gestaltung der durch die LEDs in ihrer Gesamtheit erzeugte Lichtverteilung ermöglicht.

Beispielsweise kann der Leuchtenkörper spiegelsymmetrisch bezüglich einer Vertikalebene ausgebildet sein, wobei die Vertikalebene die mit LEDs besetzte Oberfläche des Leuchtenkörpers schneidet. Dadurch läßt sich eine spiegelsymmetrische Lichtstärkenverteilung erzeugen, wie sie beispielsweise für Straßenleuchten gewünscht ist. Bei Straßenleuchten ist eine längegestreckte Lichtverteilung günstig, welche es ermöglicht, die Straße über einen längeren Abschnitt aus zu beleuchten. Dadurch sind größere Leuchtenabstände möglich.

Gemäß einer Ausführungsform weist die LED-Leuchte einen Leuchtenkörper auf, dessen mit LEDs besetzte Oberflächen aus zwei stetig gekrümmten Teilflächen gebildet ist, die entlang einer Kante aneinandergrenzen. Die Kante verläuft insbesondere in der Vertikalebene des Leuchtenkörpers. Die zwei Teilflächen können an der Kante so aneinander angrenzen, daß sie einen konstanten Winkel einschließen. Bei an der Kante gekrümmten Teilflächen ist der Winkel definiert als der kleinste eingeschlossene Winkel zweier Flächentangenten der einen und der anderen Teilfläche, die an der Kante zusammentreffen.

Gemäß einer Ausführungsform, wie sie beispielsweise für Straßenleuchten geeignet ist, ist der Leuchtenkörper blattartig geformt.

Gemäß einer bevorzugten Ausführungsform ist die mit LEDs besetzte Oberfläche des Leuchtenkörpers mit einer lichtdurchlässigen oder wenigstens teilweise lichtdurchlässigen Abdekkung versehen. Die Abdeckung kann klar transparent und/oder teilweise mattiert sein. Insbesondere können LEDs mit unterschiedlichen Lichtfarben auf der Oberfläche des Leuchtenkörpers vorgesehen sein. Diese Bereiche können mit mattierten Teilbereichen der Abdeckung überdeckt sein, so daß die Lichtfarben durch Lichtstreuung teilweise gemischt werden. Die besonders lichtstarken LEDs, die beispielsweise weißes Licht erzeugen, sind vorzugsweise unter Bereichen der Abdeckung angeordnet, die klar transparent sind. Diese LEDs sorgen für den Hauptanteil der gewünschten Lichtstärkeverteilung der Leuchte.

Bevorzugte Ausführungsformen der erfindungsgemäßen Leuchte werden nachfolgend im Detail im Zusammenhang mit den beigefügten Figuren erläutert.
- Figur 1: zeigt eine perspektivische Darstellung einer ersten Ausführungsform der erfindungsgemäßen Leuchte.
- Figur 2: zeigt eine perspektivische Darstellung einer zweiten Ausführungsform der erfindungsgemäßen Leuchte.

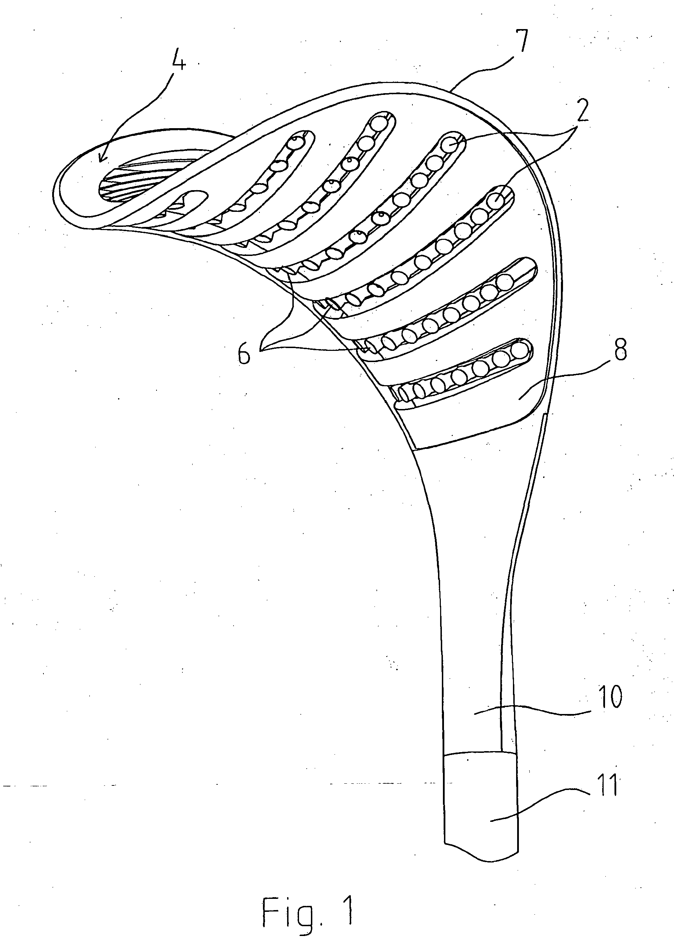

Bezugnehmend auf Figur 1 ist eine Ausführungsform einer erfindungsgemäßen Leuchte dargestellt. Bei der dargestellten Ausführungsform handelt es sich um eine Straßenleuchte.

Die Grundform der Leuchte wird durch einen Leuchtenkörper 4 bestimmt, welcher flächig ist, jedoch stark gekrümmt ist. Entlang einer ersten Tangentialrichtung des Leuchtenkörpers 4, die in der Vertikalen verläuft, ist der Leuchtenkörper 4 konkav gekrümmt. In der dazu senkrechten Tangentialrichtung des flächigen Leuchtenkörpers 4, d.h. in der Horizontalen, ist der Leuchtenkörper konvex gekrümmt.

Auf dem Leuchtenkörper sind in mehreren Reihen 6 von LEDs 2 angeordnet. Die Reihen 6 erstrecken sich etwa entlang der konvexen Krümmung des Leuchtenkörpers 4. Die Reihen 6 weisen entlang einer vertikalen Schnittebene der Leuchte etwa einen konstanten Abstand zueinander auf. Zum Seitenrand 7 des Leuchtenkörpers 4 hin verringert sich der Abstand der LEDs 2 in den Reihen 6. Zusätzlich sind die LEDs 2 in der Nähe des Seitenrandes 7 in den Bereichen, welche die maximale Erstreckung des Leuchtenkörpers definieren, mit einer fokussierenden Optik versehen. Durch diese Maßnahmen und durch die spezielle Krümmung des Leuchtenkörpers werden Maxima in der Lichtverteilungskurve erzielt, die in Richtung zur Straßenlängserstreckung weisen, wenn die Leuchte am Straßenrand positioniert ist.

Der Leuchtenkörper 4 ist auf der mit LEDs besetzten Oberfläche vollständig mit einer Abdekkung 8 versehen, welche in den Teilbereichen der LED-Reihen 6 aus einem klaren transparenten Material gebildet ist. Demgegenüber sind die Bereiche zwischen den LED-Reihen aus einem diffus lichtreuenden Material gebildet. Unter diesen Bereichen können auch weitere LEDs, insbesondere LEDs mit unterschiedlichen Lichtfarben angeordnet sein (in den Figuren nicht dargestellt).

Die Dicke der Leuchte entlang der Richtung der Flächennormalen der mit LEDs besetzten Oberfläche des Leuchtenkörpers 4 beträgt in der dargestellten Ausführungsform nicht mehr als 60 mm. Dabei beträgt die Dicke des Leuchtenkörpers 4 selbst ohne LEDs zwischen 4 mm und 10 mm.

Der Leuchtenkörper 4 ist aus einem Aluminiumguß gefertigt. Die LEDs 2 sind entweder direkt auf dem Leuchtenkörper angeordnet oder gruppenweise auf gemeinsamen Boards, welche jeweils eine LED-Reihe 6 oder einen Teil einer LED-Reihe 6 umfassen, angeordnet, wobei die Boards ihrerseits auf dem Leuchtenkörper in gutem thermischen Kontakt angebracht sind. Die Boards sind mit dem Leuchtenkörper mechanisch verbunden. Insbesondere kann eine Wärmeleitpaste zwischen den Boards und dem Leuchtenkörper 4 vorgesehen sein, um die Wärmeleitfähigkeit zwischen den Bauteilen zu erhöhen.

Die von den LEDs 2 im Betrieb entwickelte Wärme wird durch den Leuchtenkörper 4 abgeleitet. Durch die flächige Bauform des Leuchtenkörpers 4 ist genug Oberfläche vorhanden, um die Wärme an die Umgebungsluft abzuführen. Ergänzend können auf der den LEDs gegenüberliegenden Oberfläche des Leuchtenkörpers Einrichtungen zum Kühlen der Leuchte vorgesehen sein, beispielsweise in Form von Kühlrippen (in den Figuren nicht dargestellt).

Der Leuchtenkörper 4 ist spiegelsymmetrisch bezüglich einer vertikalen Schnittebene der Leuchte ausgeführt. Ferner sind die Seitenränder 7, welche den Leuchtenkörper begrenzen, durchgängig abgerundet. Nach unten hin verjüngt sich der Querschnitt des Leuchtenkörpers und mündet in einer runden Aufnahme 10, an der der Leuchtenkörper an einen Mast 11 angebracht ist.

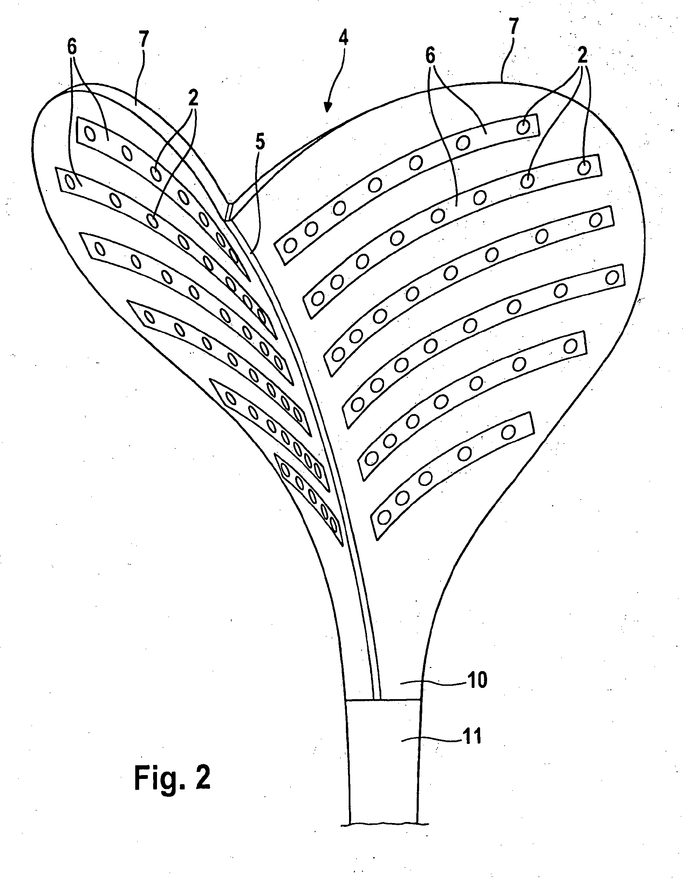

Die Figur 2 zeigt eine alternative Ausführungsform der erfindungsgemäßen Leuchte. Gemäß dieser Ausführungsform ist der Leuchtenkörper 4 aus zwei stetig gekrümmten Teilflächen zusammengesetzt, die entlang einer gemeinsamen Kante 5 miteinander verbunden sind. Der Leuchtenkörper 4 ist bezüglich einer Vertikalebene der Leuchte, welche die Kante 5 enthält, ebenfalls spiegelsymmetrisch ausgebildet. Die stetig gekrümmten Teilflächen des Leuchtenkörpers sind jeweils in zwei Tangentialrichtungen, nämlich in horizontaler und vertikaler Richtung, konkav gekrümmt.

Jede der beiden Teilflächen des Leuchtenkörpers 4 ist entlang der Seitenränder 7 abgerundet. Nach unten hin verjüngt sich der Leuchtenköper 4 und endet in einer Aufnahme 10, mit der der Leuchtenkörper an einem Mast 11 montiert ist.

Die LEDs 2 sind auf jeder Teilfläche des Leuchtenkörpers 4 in mehreren Reihen 6 angeordnet. Diese Reihen 6 erstrecken sich etwa parallel.

Der mittlere Abstand der LEDs in den Reihen 6 verringert sich bei dieser Ausführungsform in Richtung zu der Kante 5, während der mittlere Abstand der LEDs in Richtung zu den Seitenrändern 7 zunimmt. Ferner sind fokussierende LED-Optiken für LEDs nahe der Kante 5 vorgesehen.

Auch in der zweiten Ausführungsform weist der Leuchtenkörper 4 in den Richtungen der Flächennormalen der mit LEDs besetzten Oberfläche des Leuchtenkörpers 4 eine Stärke von nicht mehr als 12 mm auf.

Gemäß den beiden dargestellten Ausführungsformen ist der Leuchtenkörper 4 mit einer durchgängigen Abdeckung 8 überdeckt. Die Abdeckung 8 ist aus eine transparenten Material gebildet. Insbesondere sind die Teilbereiche der Abdeckung 8, welche über den LED-Reihen 6 liegen aus einem klaren transparenten Material gebildet. Die übrigen Teilbereiche sind mattiert ausgeführt. Unter diesen Teilbereichen können weitere LEDs, insbesondere lichtschwächere LEDs mit unterschiedlichen Lichtfarben, angeordnet sein. Die Farben werden durch Lichtstreuung an der mattierten Abdeckung teilweise gemischt.

Die beiden dargestellten Ausführungsformen ermöglichen eine Lichtverteilung, wie sie für Straßenleuchten von Vorteil ist. Durch die symmetrische Ausbildung der mit LEDs besetzen Oberfläche des Leuchtenkörpers 4 wird eine Lichtverteilung erzeugt, die es erlaubt, eine Straße, an deren Rand die erfindungsgemäße Leuchte angeordnet ist, weitestgehend gleichmäßig auszuleuchten.

Durch die geringe Dicke des Leuchtenkörpers 4 und dessen abgerundete geschwungene Form wird eine verhältnismäßig kompakte Leuchte gebildet, die dennoch genug Fläche bietet, um die LEDs für eine gewünschte Lichtverteilung anzuordnen und die gleichzeitig auf Vorder- und Rückseite des Leuchtenkörpers 4 zur Kühlung der LEDs beitragen kann.

Die der mit LEDs besetzten Oberfläche gegenüberliegende Seite der Leuchte kann dabei weiterhin für die Aufnahme anderer Bauteile dienen. Beispielsweise können, wie bereits erwähnt, darauf Kühlrippen vorgesehen sein. Ferner ist es möglich, Betriebsgeräte für die Leuchte auf dieser Seite anzuordnen. Gemäß einer Ausführungsform können auch Solarzellen auf der den LEDs abgewandten Seite des Leuchtenkörpers angebracht sein. Durch die gewölbte Bauform des Leuchtenkörpers 4 ist die den LEDs gegenüberliegende Seite des Leuchtenkörpers 4 für den Betrachter nicht einsehbar. Es lassen sich daher auf dieser Seite der Leuchte Betriebsmittel für die Leuchte anordnen, ohne den ästhetischen Gesamteindruck zu stören. Ferner wirken sich die auf der abgewandten Seite angeordneten Betriebsmittel nicht auf die durch die Leuchte erzeugte Lichtverteilung aus, weil die Lichtverteilung alleine durch die gewölbte Form der mit LEDs besetzten Oberfläche, sowie durch die Eigenschaft und die Verteilung der LEDs selbst auf diese Oberfläche bestimmt wird. Insbesondere ist die den LEDs abgewandte Seite des Leuchtenkörpers 4 dafür vorgesehen, Solarzellen darauf zu montieren. Die Solarzellen können mit einem Konverter verbunden sein, der eine Batterie auflädt, die vorzugsweise in dem Mast der Leuchte angeordnet ist. Die Solarzellen und die Batterie sind so dimensioniert, daß die Leuchte während der Einschaltzeiten, z.B. bis zu acht Stunden pro Tag, ausschließlich über die Batterie versorgt werden kann. Sofern es die örtlichen Gegebenheiten nicht zulassen, die Batterie ausschließlich über die Solarzellen aufzuladen, ist gemäß einer Ausführungsform ferner eine Einrichtung zum Aufladen der Batterie vorgesehen, die aus dem Stromnetz gespeist wird. Die Ladeeinrichtung schaltet sich automatisch ein, sobald eine Mindestspannung der Batterie unterschritten wird.

### Bezugszeichenliste:

- 2: LED
- 4: Leuchtenkörper
- 5: Kante
- 6: LED-Reihe
- 7: Seitenränder
- 8: Abdeckung
- 10: Aufnahme
- 11: Leuchtenmast

## Patentansprüche

1. Leuchte mit mehreren LEDs (2) als Lichtquellen, die auf wenigstens einer Oberfläche eines Leuchtenkörpers (4) verteilt angeordnet sind, wobei die Oberfläche entlang wenigstens einer ersten Tangetialrichtung der Fläche gekrümmt ist, so daß LEDs (2) in unterschiedliche Raumrichtungen weisen, und wobei die Leuchte entlang der Flächennormalen der Oberfläche des Leuchtenkörpers eine Dicke aufweist, die kleiner als 15% der maximalen Erstreckung des Leuchtenkörpers (4) ist, wobei die Erstreckung des Leuchtenkörpers (4) definiert ist als die Länge der Schnittkurve zwischen der mit LEDs (2) besetzten Oberfläche des Leuchtenkörpers (4) jeweils bis zu den Außenrändern gemessen und einer fiktiven Schnittebene, welche die Flächennormale der besagten Oberfläche enthält, **dadurch gekennzeichnet, dass** die LEDs (2) gruppenweise auf Boards angeordnet sind, die in die Oberfläche des Leuchtenkörpers integriert sind oder auf der Oberfläche des Leuchtenkörpers (4) angeordnet sind, und die Boards durch eine lösbare mechanische Verbindungseinrichtung an den Leuchtenkörper (4) gekoppelt sind.

2. Leuchte nach Anspruch 1, wobei die Dicke der Leuchte außerdem weniger als 30% der Erstreckung des Leuchtenkörpers (4) entlang der Richtung senkrecht zu der Richtung, welche die Maximalerstreckung definiert, beträgt.

3. Leuchte nach einem der vorhergehenden Ansprüche, wobei die mit LEDs (2) besetzte Oberfläche des Leuchtenkörpers (4) einen stetig gekrümmten Flächenabschnitt oder mehrere stetig gekrümmte Flächenabschnitte, die entlang einer oder mehrerer Kanten (5) verbunden sind, umfaßt.

4. Leuchte nach einem der vorhergehenden Ansprüche, wobei die mit LEDs besetzte Oberfläche des Leuchtenkörpers entlang der wenigstens einen ersten Tangentialrichtung konkav gewölbt ist und/oder entlang einer zweiten Tangentialrichtung konvex, gradlinig oder konkav ausgebildet ist.

5. Leuchte nach einem der vorhergehenden Ansprüche, wobei der Leuchtenkörper (4) aus einem Material gebildet ist, das eine Wärmeleitfähigkeit von mehr als 40 W/(K·m), bevorzugt mehr als 100 W/(K.m) aufweist, insbesondere aus Aluminium gebildet ist.

6. Leuchte nach einem der vorhergehenden Ansprüche, wobei der Leuchtenkörper (4) auf einer Seite, die der mit LEDs (2) besetzten Oberfläche gegenüberliegt, Elemente zur Wärmeabgabe aufweist, insbesondere Kühlrippen.

7. Leuchte nach einem der vorhergehenden Ansprüche, wobei der Leuchtenkörper (4) auf einer Seite, die der mit LEDs (2) besetzten Oberfläche gegenüberliegt, Solarzellen aufweist.

8. Leuchte nach einem der vorhergehenden Ansprüche, wobei der Leuchtenkörper (4) entlang von Seitenrändern (7), welche die seitliche Begrenzung der mit LEDs (12) besetzten Oberfläche des Leuchtenkörpers bilden, wenigstens teilweise abgerundet ist.

9. Leuchte nach einem der vorhergehenden Ansprüche, wobei der Leuchtenkörper (4) spiegelsymmetrisch bezüglich einer Vertikalebene ist, wobei die Vertikalebene die mit LEDs (2) besetzte Oberfläche des Leuchtenkörpers (4) schneidet.

10. Leuchte nach Anspruch 9, wobei der Leuchtenkörper (4) entlang der Vertikalebene eine Kante (5) aufweist, entlang derer zwei Teilflächen der mit LEDs (2) besetzten Oberfläche des Leuchtenkörpers (4) aneinandergrenzen, insbesondere unter einem entlang der Kante (5) konstanten Winkel.

11. Leuchte nach einem der vorhergehenden Ansprüche, wobei der Leuchtenkörper (4) blattartig geformt ist.

12. Leuchte nach einem der vorhergehenden Ansprüche, wobei die mit LEDs (2) besetzte Oberfläche des Leuchtenkörpers (4) mit einer lichtdurchlässigen Abdeckung (8) versehen ist.

## Claims

1. A luminaire having a plurality of LEDs (2) as light sources arranged distributed on at least one surface of a luminaire body (4), with the surface being curved along at least a first tangential direction of the surface such that LEDs (2) point in different spatial directions, and with the luminaire displaying a thickness along the surface normal of the surface of the luminaire body which is less than 15% of the maximum extension of the luminaire body (4), the extension of the luminaire body (4) being defined as the length of the intersecting curve between the surface of the luminaire body (4) occupied by LEDs (2) measured as far as the outer edges and a notional intersecting plane which contains the surface normal of said surface, **characterised in that** the LEDs (2) are arranged in groups on boards that are integrated into the surface of the luminaire body or arranged on the surface of the luminaire body (4), and the boards are connected to the luminaire body (4) by a detachable mechanical connection device.

2. The luminaire of claim 1 wherein the thickness of the luminaire is also less than 30% of the extension of the luminaire body (4) along the direction square to the direction which defines the minimum extension.

3. The luminaire of either of the preceding claims wherein the surface of the luminaire body (4) occupied by LEDs (2) comprises one or a plurality of continuously curved surface sections that are connected along one or more edges (5).

4. The luminaire of any one of the preceding claims wherein the surface of the luminaire body occupied by LEDs is concavely arched along the at least one first tangential direction and/or is convex, straight or concave in configuration along a second tangential direction.

5. The luminaire of any one of the preceding claims wherein the luminaire body (4) is formed from a material, in particular aluminium, possessing a thermal conductivity of more than 40 W/(K-m), preferably more than 100 W/(K-m).

6. The luminaire of any one of the preceding claims wherein the luminaire body (4) comprises, on a side which is opposite the surface occupied by LEDs (2), elements, in particular cooling fins, for heat dissipation.

7. The luminaire of any one of the preceding claims wherein the luminaire body (4) comprises, on a side which is opposite the surface occupied by LEDs (2), photovoltaic cells.

8. The luminaire of any one of the preceding claims wherein the luminaire body (4) is at least partially rounded along lateral edges (7) which form the lateral limitation of the luminaire body surface that is occupied by LEDs (12).

9. The luminaire of any one of the preceding claims wherein the luminaire body (4) is mirror-symmetrical relative to a vertical plane intersecting the surface of the luminaire body (4) which is occupied by LEDs (2).

10. The luminaire of claim 9 wherein the luminaire body (4) comprises, along the vertical plane, an edge (5) along which two part-surfaces of the surface of the luminaire body (4) occupied by LEDs (2) abut one another, in particular at an angle which is constant along the edge (5).

11. The luminaire of any one of the preceding claims wherein the luminaire body (4) is formed in the shape of a leaf.

12. The luminaire of any one of the preceding claims wherein the surface of the luminaire body (4) occupied by LEDs (2) is provided with a translucent cover (8).

## Revendications

1. Lampe comportant plusieurs diodes électroluminescentes (2) formant des sources lumineuses, lesquelles sont réparties sur au moins une surface d'un corps de lampe (4), ladite surface étant courbe le long d'au moins une première direction tangentielle de la surface, de telle sorte que les diodes électroluminescentes (2) sont dirigées dans différentes directions dans l'espace, et ladite lampe ayant le long de la normale de la surface du corps de lampe une épaisseur qui est inférieure de 15 % à l'extension maximale du corps de lampe (4), l'extension du corps de lampe (4) étant définie comme la longueur de la courbe de coupe mesurée entre la surface du corps de lampe (4), occupée par les diodes électroluminescentes (2), jusqu'aux bords extérieurs et un plan de coupe fictif, qui contient la normale de ladite surface, **caractérisée en ce que** les diodes électroluminescentes (2) sont disposées par groupes sur des lattes qui sont intégrées dans la surface du corps de lampe ou sont disposées sur la surface du corps de lampe (4), et les lattes sont couplées au corps de lampe (4) par l'intermédiaire d'un dispositif d'assemblage mécanique amovible.

2. Lampe selon la revendication 1, dans laquelle l'épaisseur de la lampe mesure, en outre, moins de 30 % de l'extension du corps de lampe (4) le long de la direction perpendiculaire à la direction définissant l'extension maximale.

3. Lampe selon l'une quelconque des revendications précédentes, dans laquelle la surface du corps de lampe (4), occupée par les diodes électroluminescentes (2), comporte une partie de surface toujours courbe ou plusieurs parties de surface toujours courbes, qui sont reliées le long d'une ou de plusieurs arêtes (5).

4. Lampe selon l'une quelconque des revendications précédentes, dans laquelle la surface du corps de lampe, occupée par les diodes électroluminescentes, présente une courbure concave le long de ladite au moins une première direction tangentielle et/ou est convexe, droite ou concave le long d'une deuxième direction tangentielle.

5. Lampe selon l'une quelconque des revendications précédentes, dans laquelle le corps de lampe (4) est réalisé dans un matériau avec une conductibilité thermique de plus de 40 W/(K.m), de préférence plus de 100 W/(K.m), en particulier en aluminium.

6. Lampe selon l'une quelconque des revendications précédentes, dans laquelle le corps de lampe (4), sur une face qui est opposée à la surface occupée par les diodes électroluminescentes (2), comporte des éléments pour la dissipation de la chaleur, en particulier des nervures de refroidissement.

7. Lampe selon l'une quelconque des revendications précédentes, dans laquelle le corps de lampe (4), sur une face qui est opposée à la surface occupée par les diodes électroluminescentes (2), comporte des cellules solaires.

8. Lampe selon l'une quelconque des revendications précédentes, dans laquelle le corps de lampe (4) est au moins partiellement arrondi le long de bords latéraux (7) qui forment la délimitation latérale de la surface du corps de lampe, occupée par les diodes électroluminescentes (2).

9. Lampe selon l'une quelconque des revendications précédentes, dans laquelle le corps de lampe (4) est symétrique par rapport à un plan vertical, ledit plan vertical coupant la surface du corps de lampe (4), occupée par les diodes électroluminescentes (2).

10. Lampe selon la revendication 9, dans laquelle le corps de lampe (4) comporte le long du plan vertical une arête (5) le long de laquelle deux surfaces partielles de la surface du corps de lampe (4), occupée par les diodes électroluminescentes (2), sont adjacentes, en particulier en formant un angle constant le long de ladite arête (5).

11. Lampe selon l'une quelconque des revendications précédentes, dans laquelle le corps de lampe (4) est réalisé en forme de feuille.

12. Lampe selon l'une quelconque des revendications précédentes, dans laquelle la surface du corps de lampe (4), occupée par les diodes électroluminescentes (2), est munie d'un revêtement (8) laissant passer la lumière.
